# EUROPEAN PATENT SPECIFICATION

(11) **EP 3 225 377 B1**
(45) Date of publication and mention of the grant of the patent: **30.10.2019**
(21) Application number: 17163016.3
(22) Date of filing: 27.03.2017
(51) Int. Cl.: B29C 45/76

(54) **INJECTION MOLDING MACHINE**
SPRITZGIESSMASCHINE
MACHINE DE MOULAGE À INJECTION

(30) Priority: 31.03.2016 JP 2016071607
(43) Date of publication of application: 04.10.2017
(73) Proprietor: SUMITOMO HEAVY INDUSTRIES, LTD., Tokyo 141-6025 (JP)
(72) Inventor: OGISO, Taro, Chiba-shi, Chiba 263-0001 (JP); HIROTOMI, Yuta, Chiba-shi, Chiba 263-0001 (JP)
(74) Representative: Louis Pöhlau Lohrentz

(56) References cited:
- EP-A1- 0 257 099
- EP-A1- 0 264 453
- WO-A1-97/13212
- WO-A1-2007/045073
- US-A- 4 066 189
- US-A- 5 180 530
- US-A- 5 861 118
- US-B1- 6 616 871

## Description

### Technical Field

The present invention relates to an injection molding machine.

### Description of Related Art

An injection molding machine described in Japanese Unexamined Patent Application Publication No. 9-109220 performs the control of moving a control object forward with a driving mechanism part to stop the object at a target position. Feedback control of speed is performed until the control object reaches a predetermined position from a forward movement start position.

The injection molding machine has a movable part, and a drive part that moves the movable part.

International Patent Application WO 97/13212 A1 describes an adaptive controller for controlling the velocity of a ram in an injection molding apparatus during the injection stage, wherein the target velocity is a step function.

International Patent Application WO 2007/045073 A1 discloses that a function which a molding machine is required to execute is predetermined by a user in a velocity vs. position diagram.

United States Patent US 6 616 871 discloses a filling step control method of injection molding machine.

In the related art, the vibration caused by the movement of the movable part is large.

### SUMMARY OF THE INVENTION

The invention has been made in view of the above problem, and a main object thereof is to provide an injection molding machine that reduces vibration caused by the movement of a movable part.

In order to solve the above problem, according to an aspect of the invention, there is provided an injection molding machine including a movable part; a drive part that moves the movable part; and a control unit that controls the drive part. The control unit gradually reduces acceleration of the movable part, then does not make the acceleration into zero, and subsequently gradually increases the acceleration, during the acceleration of increasing the speed of the movable part in a predetermined direction.

According to the embodiment of the invention, the injection molding machine that reduces vibration caused by the movement of the movable part is provided.

### BRIEF DESCRIPTION OF THE DRAWINGS

FIG. 1 is a view illustrating a state during completion of the mold opening of an injection molding machine according to an embodiment.
FIG. 2 is a view illustrating a state during the mold clamping of the injection molding machine according to the embodiment.
FIG. 3 is a view illustrating a setting screen according to the embodiment.
FIG. 4 is a view illustrating speed patterns of the cross-head during mold closing according to a first example, a first comparative example, and a second comparative example.
FIG. 5 is a view illustrating a speed pattern of the cross-head and a torque pattern of the mold clamping motor according to the first comparative example.
FIG. 6 is a view illustrating a speed pattern of the cross-head and a torque pattern of the mold clamping motor according to the second comparative example.
FIG. 7 is a view illustrating a speed pattern of the cross-head and a torque pattern of the mold clamping motor according to the first example.
FIG. 8 is a view illustrating speed patterns of the cross-head during mold closing according to a second example, a third comparative example, and a fourth comparative example.
FIG. 9 is a view illustrating speed patterns of the cross-head during mold opening according to a third example, a fifth comparative example, and a sixth comparative example.
FIG. 10 is a view illustrating speed patterns of the cross-head during mold opening according to a fourth example, a seventh comparative example, and an eighth comparative example .

### DETAILED DESCRIPTION OF THE INVENTION

An embodiment for realizing the invention will be described below with reference to the drawings, the same or corresponding components being designated by the same or corresponding reference signs, and the description thereof being omitted.

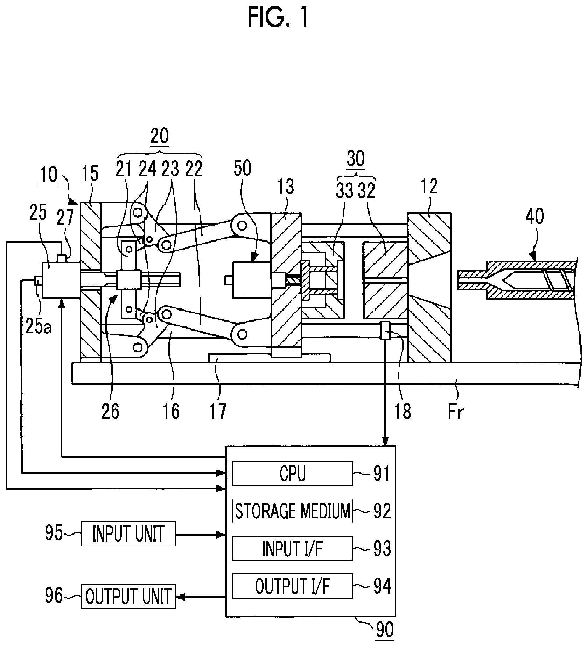

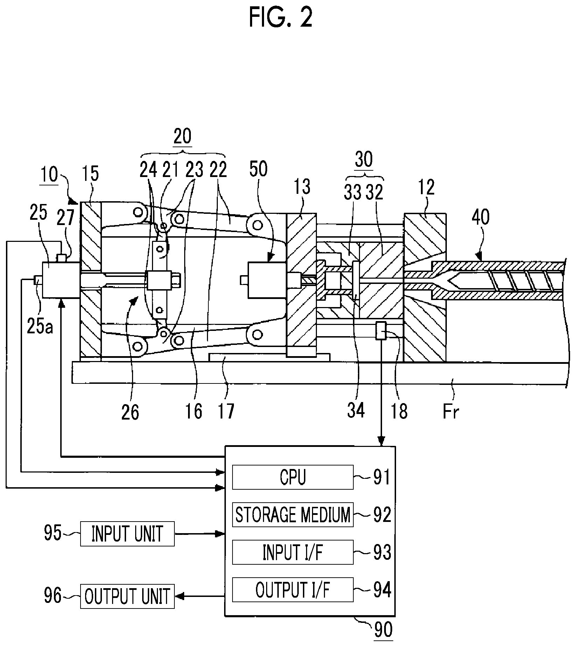

FIG. 1 is a view illustrating a state during completion of the mold opening of an injection molding machine according to an embodiment. FIG. 2 is a view illustrating a state during the mold clamping of the injection molding machine according to the embodiment. As illustrated in FIGS. 1 and 2, an injection molding machine has a frame Fr, a mold clamping unit 10, an injection unit 40, an ejector unit 50, a control unit 90, an input unit 95, and an output unit 96.

In the following description, a description will be made with a movement direction (rightward direction in FIGS. 1 and 2) of a movable platen 13 during mold closing being as the front and a movement direction (leftward direction in FIGS. 1 and 2) of the movable platen 13 during mold opening being as the rear.

The mold clamping unit 10 performs mold closing, mold clamping, and mold opening of a mold unit 30. The mold clamping unit 10 is, for example, of a horizontal type in which the mold opening/closing direction is a horizontal direction. The mold clamping unit 10 has a stationary platen 12, the movable platen 13, a toggle support 15, a tie-bar 16, a toggle mechanism 20, a mold clamping motor 25, and a motion conversion mechanism 26.

The stationary platen 12 is fixed to the frame Fr. A stationary mold 32 is attached to the surface of the stationary platen 12 that faces the movable platen 13.

The movable platen 13 is made movable along a guide (for example, a guide rail) 17 laid on the frame Fr, and is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The stationary mold 32 and the movable mold 33 constitute the mold unit 30.

The toggle support 15 is coupled to the stationary platen 12 at a distance therefrom, and is placed on the frame Fr so as to be movable in a mold opening/closing direction. In addition, the toggle support 15 may be made movable along a guide laid on the frame Fr. The guide of the toggle support 15 may be shared by the guide 17 of the movable platen 13.

In addition, in the present embodiment, the stationary platen 12 is fixed to the frame Fr and the toggle support 15 is made movable in the mold opening/closing direction with respect to the frame Fr. However, the toggle support 15 may be fixed to the frame Fr and the stationary platen 12 may be made movable in the mold opening/closing direction with respect to the frame Fr.

The tie-bar 16 couples the stationary platen 12 and the toggle support 15 together with a space therebetween . A plurality of (for example, four) the tie-bars 16 may be used. Each tie-bar 16 is made parallel to the mold opening/closing direction, and is extended in response to a clamping force. At least one tie-bar 16 is provided with a clamping force detector 18. The clamping force detector 18 detects the strain of the tie-bars 16, thereby detecting a clamping force, and outputs a signal showing a detection result to the control unit 90.

In addition, the clamping force detector 18 is not limited to the strain gauge type, and may be of a piezoelectric type, a capacitance type, a hydraulic type, an electromagnetic type, or the like, and the attachment position thereof is also not limited to the tie-bar 16.

The toggle mechanism 20 moves the movable platen 13 with respect to the stationary platen 12. The toggle mechanism 20 is disposed between the movable platen 13 and the toggle support 15. The toggle mechanism 20 is constituted of a cross-head 21, a pair of link groups, and the like. Each link group has a first link 22 and a second link 23 coupled together so as to be bendable and stretchable with a pin or the like. The first link 22 is rockably attached to the movable platen 13 with a pin or the like, and the second link 23 is rockably attached to the toggle support 15 with a pin or the like. The second link 23 is combined with the cross-head 21 via a third link 24. By moving the cross-head 21 forward and backward, the first link 22 and the second link 23 are bent and stretched, and the movable platen 13 is moved forward and backward with respect the toggle support 15.

In addition, the configuration of the toggle mechanism 20 is not limited to the configuration illustrated in FIGS. 1 and 2. For example, in FIGS. 1 and 2, the number of joints is five. However, four joints may be adopted, or one end part of the third link 24 may be combined with a joint between the first link 22 and the second link 23.

The mold clamping motor 25 is attached to the toggle support 15, and actuates the toggle mechanism 20. The mold clamping motor 25 moves the cross-head 21 forward and backward, thereby bending and stretching the first link 22 and the second link 23 and moving the movable platen 13 forward and backward.

The motion conversion mechanism 26 converts a rotational motion of the mold clamping motor 25 into a linear motion of the cross-head 21. The motion conversion mechanism 26 includes a screw shaft, and a screw nut that is threadedly engaged with the screw shaft. A ball or roller may be interposed between the screw shaft and the screw nut.

The control unit 90 has a central processing unit (CPU) 91, a storage medium 92, such as a memory, an input interface 93, and an output interface 94, as illustrated in FIGS. 1 and 2. The control unit 90 makes the CPU 91 execute a program stored in the storage medium 92, thereby controlling various kinds of control. Additionally, the control unit 90 receives a signal from the outside with the input interface 93, and transmits a signal to the outside with the output interface 94.

The input unit 95 receives a user's input operation, and transmits an operation signal according to the user's input operation to the control unit 90. As the input unit 95, for example, a touch panel is used. The touch panel serves also as the output unit 96 to be described below.

The output unit 96 displays an operation screen according to the input operation of the input unit 95 under the control performed by the control unit 90. A plurality of the operation screens are prepared, are displayed in a switching manner or are displayed in an overlapping manner.

The user operates the input unit 95 while viewing the operation screen displayed by the output unit 96, thereby performing setting of the mold clamping unit 10, the injection unit 40, the ejector unit 50, and the like. The operation screen used for the setting is also referred to as a setting screen.

The setting input on the setting screen is stored in the storage medium 92, and is read if necessary. The control unit 90 controls a mold closing step, a mold clamping step, a mold opening step, and the like on the basis of the setting stored in the storage medium 92.

In the mold closing step, by driving the mold clamping motor 25 to move the cross-head 21 forward to a mold closing completion position at a set speed, the movable platen 13 is moved forward and the movable mold 33 is touched on the stationary mold 32. The position and speed of the cross-head 21 are detected using, for example, an encoder 25a or the like of the mold clamping motor 25. The encoder 25a detects the rotation of the mold clamping motor 25, and sends a signal showing a detection result thereof to the control unit 90.

In the mold clamping step, a clamping force is caused by further driving the mold clamping motor 25 to further move the cross-head 21 forward from the mold closing completion position to a mold clamping position. A cavity space 34 is formed between the movable mold 33 and the stationary mold 32 during mold clamping, and the injection unit 40 fills the cavity space 34 with a liquid molding material. The filled molding material is hardened, and thereby a molding product is obtained. The number of cavity spaces 34 may be plural. In that case, a plurality of molding products are simultaneously obtained.

In the mold opening step, by driving the mold clamping motor 25 to move the cross-head 21 backward to a mold opening completion position at a set speed, the movable platen 13 is moved backward and the movable mold 33 is separated from the stationary mold 32. Thereafter, the ejector unit 50 ejects a molding product from the movable mold 33.

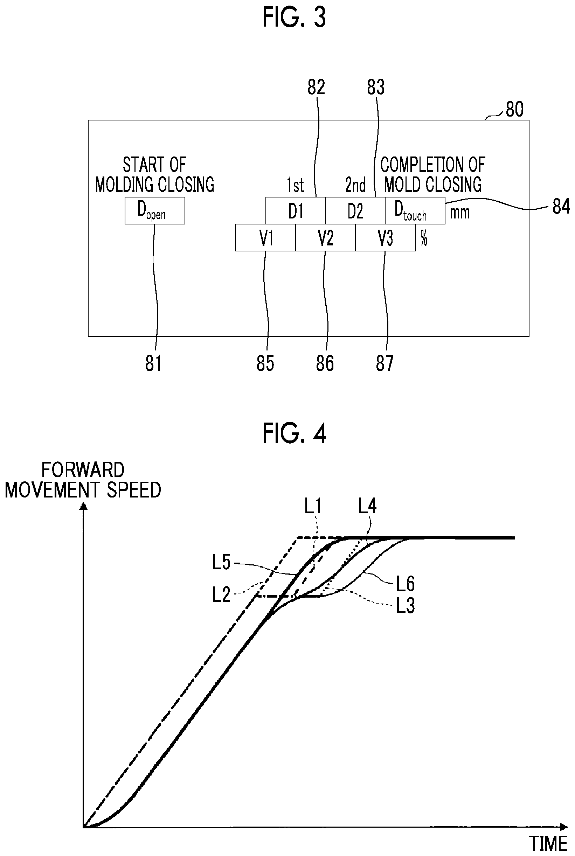

FIG. 3 is a view illustrating the setting screen according to the embodiment. A setting screen 80 illustrated in FIG. 3 is used for setting of the position and speed of the cross-head 21 during mold closing. In addition, since the setting screen used for the setting of the position and the speed of the cross-head 21 during mold opening is the same as the setting screen 80 illustrated in FIG. 3, the illustration thereof is omitted. In the present embodiment, the cross-head 21 corresponds to a movable part set fourth in the claims, and the mold clamping motor 25 corresponds to a drive part set fourth in the claims.

The setting screen 80 has an input column 81 to which a mold closing start position is input, an input column 82 to which a first position in front of the mold closing start position is input, an input column 83 to which a second position in front of the first position is input, and an input column 84 to which the mold closing completion position in front of the second position is input. The mold closing start position is the same position as the above-de scribed mold opening completion position. The mold closing start position, the first position, the second position, the mold closing completion position, and the like are expressed by a distance from a reference position set in front of the mold closing completion position.

Additionally, the setting screen 80 has an input column 85 to which the forward movement speed at the first position is input, an input column 86 to which the forward movement speed at the second position is input, and an input column 87 to which the forward movement speed at the mold closing completion position is input. The forward movement speed is expressed by, for example, the rotational speed of the mold clamping motor 25, and is expressed by the percentage (%) thereof to a maximum engine speed.

In addition, although the number of positions set from the mold closing start position to the mold closing completion position is two in FIG. 3, the number of positions is not be limited particularly and may be, for example, three or more. Additionally, the control unit 90 may manage positions and speeds that are not displayed on the setting screen 80 in order to correct a speed pattern.

FIG. 4 is a view illustrating speed patterns of the cross-head during mold closing according to a first example, a first comparative example, and a second comparative example. In FIG. 4, dashed lines L1 to L3 illustrate speed patterns before moving average processing, and solid lines L4 to L6 illustrate speed patterns after the moving average processing. A dashed line L1 and a solid line L4 are speed patterns of the first example, a dashed line L2 and a solid line L5 are speed patterns of the first comparative example, and a dashed line L3 and a solid line L6 are speed patterns of the second comparative example.

The control unit 90 creates speed patterns in polygonal lines illustrated by the dashed lines L1 to L3, on the basis of data input in the setting screen 80. Here, as inclinations (that is, accelerations) when changing speed, inclinations prepared in advance are used. For example, the forward movement speed rises at a predetermined inclination from zero to V1. The forward movement speed is maintained at V1 until the distance from the reference position reaches D1 after the forward movement speed reaches V1. If the distance from the reference position reaches D1 in a case where V1 is smaller than V2, the forward movement speed rises at a predetermined inclination from V1 to V2. The forward movement speed is maintained at V2 until the distance from the reference position reaches D2 after the forward movement speed reaches V2. On the other hand, in a case where V1 is the same as V2, the forward movement speed is maintained at V2 until the distance from the reference position reaches D2 after the forward movement speed rises at a predetermined inclination from zero to V2 and reaches V2.

Next, the control unit 90 smoothens the speed patterns in the polygonal lines illustrated by the dashed lines L1 to L3 through the moving average processing, and creates the speed patterns illustrated by the solid lines L4 to L6. Here, the moving average may be any of a simple moving average, a weighted moving average, an index moving average, and the like. The moving average processing may include the processing of shifting a speed pattern along a time axis, for adjustment of mold closing start timing.

Thereafter, the control unit 90 moves the cross-head 21 forward to perform mold closing according to the speed patterns illustrated by the solid lines L4 to L6. In the mold closing step, feedback control is performed such that the speed of the cross-head 21 reaches a set value. Since the speed patterns of the cross-head 21 are smoothened, an abrupt change in acceleration can be suppressed, and vibration can be reduced.

Meanwhile, during the acceleration of increasing the speed in front of the cross-head 21, the torque of the mold clamping motor 25 varies according to the acceleration of the cross-head 21. As the acceleration of the cross-head 21 is larger, the torque of the mold clamping motor 25 becomes larger.

The torque of the mold clamping motor 25 can be detected by the torque detector 27 or the like. The torque detector 27, for example, detects the electric current of the mold clamping motor 25, thereby detecting the torque of the mold clamping motor 25, and sends a signal showing a detection result thereof to the control unit 90. In addition, the torque of the mold clamping motor 25 can also be obtained from a current command value during the feedback control.

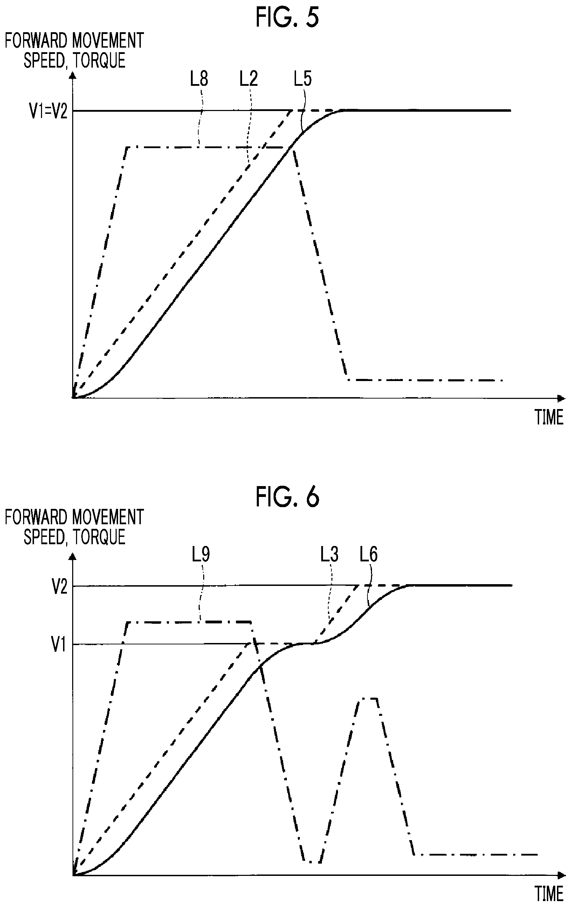

FIG. 5 is a view illustrating a speed pattern of the cross-head and a torque pattern of the mold clamping motor according to the first comparative example. In FIG. 5, a one-dot chain line L8 illustrates a torque pattern of the mold clamping motor 25 when moving the cross-head 21 forward according to the speed pattern illustrated by the solid line L5.

In the first comparative example, V1 is set to the same value as V2. The forward movement speed before the moving average processing rises at a predetermined inclination from zero to V2 as illustrated by the dashed line L2, and is then maintained at V2 until the distance from the reference position reaches D2. As a result, the forward movement speed after the moving average processing rises smoothly from zero to V2 as illustrated by the solid line L5, and is then maintained at V2 until the distance from the reference position reaches D2.

The control unit 90 gradually increases the acceleration, maintains the acceleration uniformly, and then, gradually reduces the acceleration, during the acceleration of increasing the forward movement speed from zero to V2 according to the speed pattern illustrated by the solid line L5. For that reason, a torque pattern has a mountain shape as illustrated by the one-dot chain line L8. The height of the mountain or the rising gradient of the mountain represents the intensity of the vibration at the time of the start of acceleration, and the height of the mountain or a falling gradient of the mountain represents the intensity of the vibration at the time of the end of acceleration.

For example, in a case where the rising gradient of the mountain is constant, as the height of the mountain is higher, at the time of the start of acceleration, the intensity of an impact force becomes larger and vibration becomes larger. On the other hand, in a case where the height of the mountain is constant, as the rising gradient of the mountain is steeper, at the time of the start of acceleration, the action time of an impact force becomes shorter and vibration becomes larger.

Similarly, in a case where the falling gradient of the mountain is constant, as the height of the mountain is higher, at the time of the end of acceleration, the intensity of an impact force becomes larger and vibration becomes larger. On the other hand, in a case where the height of the mountain is constant, as the falling gradient of the mountain is steeper, at the time of the end of acceleration, the action time of an impact force becomes shorter and vibration becomes larger.

The falling gradient of the mountain of the torque pattern of the first comparative example is steep compared to the falling gradient of the mountain of the torque pattern of the first example . For that reason, in the first comparative example, at the time of the end of acceleration, the action time of an impact force is shorter and vibration is larger, than that of the first example.

FIG. 6 is a view illustrating a speed pattern of the cross-head and a torque pattern of the mold clamping motor according to the second comparative example. In FIG. 6, a one-dot chain line L9 illustrates a torque pattern of the mold clamping motor 25 when moving the cross-head 21 forward according to the speed pattern illustrated by the solid line L6.

In the second comparative example, V1 is set to a value smaller than V2. The forward movement speed before the moving average processing rises at a predetermined inclination from zero to V1 as illustrated by the dashed line L3, and is then maintained at V1 until the distance from the reference position reaches D1. If the distance from the reference position reaches D1, the forward movement speed rises at a predetermined inclination from V1 to V2. The forward movement speed is maintained at V2 until the distance from the reference position reaches D2 after the forward movement speed reaches V2. As a result, the forward movement speed after the moving average processing rises smoothly from zero to V1 as illustrated by the solid line L6, is then maintained at V1, rises smoothly from V1 to V2, and is then maintained at V2.

The control unit 90 repeats making the acceleration gradually large, maintaining the acceleration uniformly, and then, reducing the acceleration gradually, during the acceleration of increasing the forward movement speed from zero to V2 according to the speed pattern illustrated by the solid line L6. During the repetition, the forward movement speed is maintained at V1 and acceleration becomes temporarily zero. Therefore, as illustrated by the one-dot chain line L9, the mountain of the torque pattern is separated in two. The number of mountains is large, and the falling gradient of the mountain is steep similar to the falling gradient of the mountain of the first comparative example. For that reason, in the second comparative example, vibration becomes larger than that of the first comparative example.

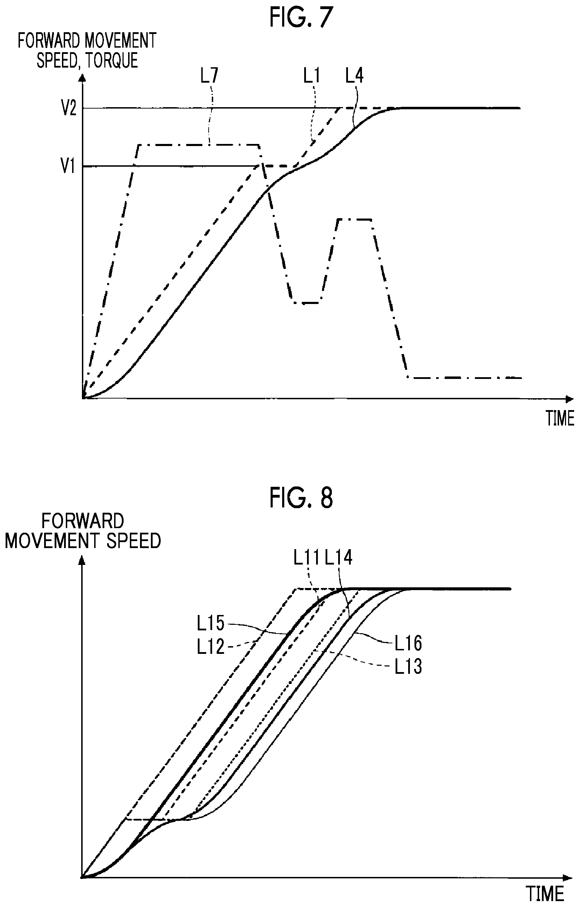

FIG. 7 is a view illustrating a speed pattern of the cross-head and a torque pattern of the mold clamping motor according to the first example. In FIG. 7, a one-dot chain line L7 illustrates a torque pattern of the mold clamping motor 25 when moving the cross-head 21 forward according to the speed pattern illustrated by the solid line L4.

In the first example, V1 is set to a value smaller than V2, similar to the second comparative example, and the first position is set closer to the mold closing start position than that of the second comparative example (that is, D1 is set at a value close to Dopen) . The forward movement speed before the moving average processing rises at a predetermined inclination from zero to V1 as illustrated by the dashed line L1, and is then maintained at V1 until the distance from the reference position reaches D1. If the distance from the reference position reaches D1, the forward movement speed rises at a predetermined inclination from V1 to V2. The forward movement speed is maintained at V2 until the distance from the reference position reaches D2 after the forward movement speed reaches V2. As a result, the forward movement speed after the moving average processing rises smoothly from zero to V1 as illustrated by the solid line L4, is then not maintained at V1, rises smoothly from V1 to V2, and is then maintained at V2.

The control unit 90 gradually increases the acceleration, maintains the acceleration uniformly, then gradually reduces the acceleration, does not make the acceleration into zero, subsequently gradually increases the acceleration, and finally gradually reduces the acceleration, during the acceleration of increasing the forward movement speed from zero to V2 according to the speed pattern illustrated by the solid line L4. For that reason, as illustrated by the one-dot chain line L7, a saddle part is formed in the middle of a descent of the mountain of the torque pattern, and the falling gradient becomes substantially gentle. Therefore, in the first example, at the time of the end of acceleration, vibration can be further reduced than that of the first comparative example or the second comparative example. It is also clear from FIG. 4 that vibration can be reduced at the time of the end of acceleration. As illustrated in FIG. 4, according to the first example, at the time of the end of acceleration, a change in acceleration can be made gentle, and vibration can be further reduced than that of the first comparative example or the second comparative example.

The control unit 90 may begin switching of the set speed before moving average processing from V1 to V2 at a timing when the acceleration is made gradually small, during the acceleration of increasing the forward movement speed from zero to V2 according to the speed pattern illustrated by the solid line L4. In order to limit a change in acceleration at the time of the end of acceleration, the acceleration can be made gradually small, cannot be made into zero, and can be made gradually large.

In addition, the control unit 90 can adjust acceleration and make the depth of a valley of the saddle part shallow, thereby also forming a flat part instead of the saddle part. By forming the flat part instead of the saddle part, vibration can be further reduced.

The control unit 90 may have the function of adjusting V1, D1, or the like, thereby creating the speed pattern as illustrated by the solid line L4. The control unit 90, for example, may perform a mold opening/closing operation on the basis of a speed pattern of initial setting, thereby acquiring a torque pattern, and correct the speed pattern on the basis of the acquired torque pattern, thereby creating the speed pattern as illustrated by the solid line L4. The creation of the speed pattern as illustrated by the solid line L4 may be performed by repeating the acquisition of the torque pattern and the correction of the speed pattern.

For example, in a case where the acquired torque pattern is formed by two separated mountains as illustrated by the one-dot chain line L9 in FIG. 6, the control unit 90 brings the first position close to the mold closing start position (that is, D1 is set to a value close to Dopen) . Accordingly, the speed pattern as illustrated by the solid line L4 can be created.

Additionally, in a case where the acquired torque pattern is formed by one mountain where a falling gradient is steep as illustrated by the one-dot chain line L8 in FIG. 5, the control unit 90 corrects V1 to a small value. In this case, the control unit 90 may bring the first position close to the mold closing start position or may keep the first position away from the mold closing start position. Accordingly, the speed pattern as illustrated by the solid line L4 can be created.

Although the control unit 90 carries out the mold opening/closing operation in order to acquire the torque pattern to be used for the correction of the speed pattern, the mold opening/closing operation may not be performed. Since the torque of the mold clamping motor 25 depends on the speed, acceleration, or the like of the cross-head 21, the control unit 90 can estimate the torque pattern on the basis of the speed pattern. The control unit 90 may correct the speed pattern using the estimated torque pattern. In addition, the estimation of the torque pattern and the correction of the speed pattern may be repeated.

FIG. 8 is a view illustrating speed patterns of the cross-head during mold closing according to a second example, a third comparative example, and a fourth comparative example. In FIG. 8, dashed lines L11 to L13 illustrate speed patterns before moving average processing, and solid lines L14 to L16 illustrate speed patterns after the moving average processing. A dashed line L11 and a solid line L14 are speed patterns of the second example, a dashed line L12 and a solid line L15 are speed patterns of the third comparative example, and a dashed line L13 and a solid line L16 are speed patterns of the fourth comparative example.

The speed patterns of the second example can be created by reversing the speed patterns of the first example illustrated in FIG. 4 vertically and horizontally and shifting the speed patterns along a time axis for adjustment of the mold closing start timing. The speed patterns of the third comparative example can be created by similarly processing the speed patterns of the first comparative example illustrated in FIG. 4. Additionally, the speed patterns of the fourth comparative example can be created by similarly processing the speed patterns of the second comparative example illustrated in FIG. 4.

The control unit 90 gradually increases the acceleration, then gradually reduces the acceleration, does not make the acceleration into zero, subsequently gradually increases the acceleration, maintains the acceleration uniformly, and finally gradually reduces the acceleration, during the acceleration of increasing the forward movement speed from zero to V2 according to the speed pattern illustrated by the solid line L14. Therefore, in the second example, at the time of the start of acceleration, a change in acceleration can be made gentler and vibration can be further reduced than that of the third comparative example or the fourth comparative example.

The control unit 90 may begin switching of the set speed before moving average processing from V1 to V2 at a timing when the acceleration is made gradually small, during the acceleration of increasing the forward movement speed from zero to V2 according to the speed pattern illustrated by the solid line L14. In order to limit a change in acceleration at the time of the start of acceleration, the acceleration can be made gradually small, cannot be made into zero, and can be made gradually large.

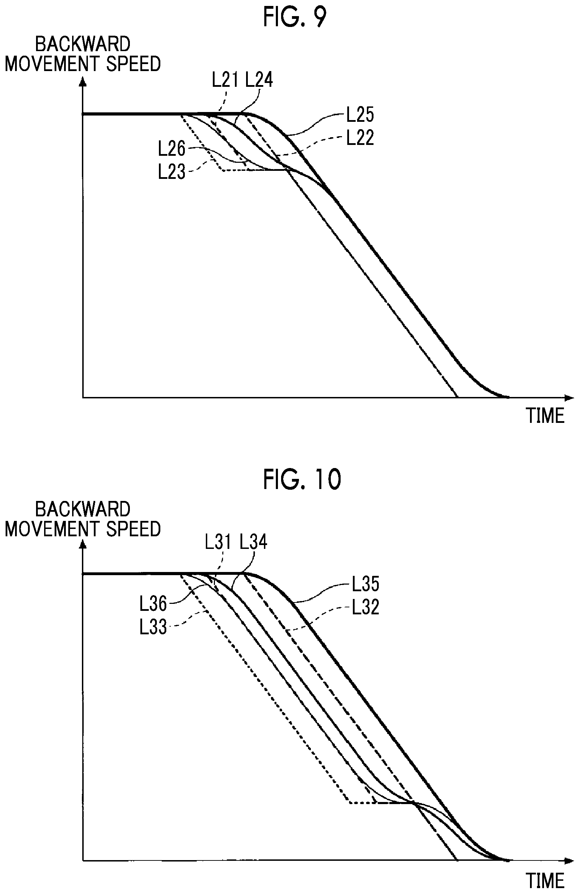

FIG. 9 is a view illustrating speed patterns of the cross-head during mold opening according to a third example, a fifth comparative example, and a sixth comparative example. In FIG. 9, dashed lines L21 to L23 illustrate speed patterns before moving average processing, and solid lines L24 to L26 illustrate speed patterns after the moving average processing. A dashed line L21 and a solid line L24 are speed patterns of the third example, a dashed line L22 and a solid line L25 are speed patterns of the fifth comparative example, and a dashed line L23 and a solid line L26 are speed patterns of the sixth comparative example.

The speed patterns of the third example can be created by reversing the speed patterns of the first example illustrated in FIG. 4 vertically and shifting the speed patterns along a time axis for adjustment of the mold opening completion timing. The forward movement speed is converted as a backward movement speed. The speed patterns of the fifth comparative example can be created by similarly processing the speed patterns of the first comparative example illustrated in FIG. 4. Additionally, the speed patterns of the sixth comparative example can be created by similarly processing the speed patterns of the second comparative example illustrated in FIG. 4.

The control unit 90 gradually increases the deceleration, then gradually reduces the deceleration, does not make the deceleration into zero, subsequently gradually increases the deceleration, maintains the deceleration uniformly, and finally gradually reduces the acceleration, during the deceleration of reducing the backward movement speed from V2 to Zero according to the speed pattern illustrated by the solid line L24. Therefore, in the third example, at the time of the start of deceleration, a change in deceleration can be made gentler and vibration can be further reduced than that of the fifth comparative example or the sixth comparative example. In addition, the deceleration means the magnitude of a speed reduced in unit time, and is expressed by a positive value.

The control unit 90 may begin switching of the set speed before moving average processing from V1 (V1 < V2) to zero at a timing when the deceleration is made gradually small, during the deceleration of reducing the backward movement speed from V2 to zero according to the speed pattern illustrated by the solid line L24. In order to limit a change in deceleration at the time of the start of deceleration, the deceleration can be made gradually small, cannot be made into zero, and can be made gradually large.

FIG. 10 is a view illustrating speed patterns of the cross-head during mold opening according to a fourth example, a seventh comparative example, and an eighth comparative example . In FIG. 10, dashed lines L31 to L33 illustrate speed patterns before moving average processing, and solid lines L34 to L36 illustrate speed patterns after the moving average processing. A dashed line L31 and a solid line L34 are speed patterns of the fourth example, a dashed line L32 and a solid line L35 are speed patterns of the seventh comparative example, and a dashed line L33 and a solid line L36 are speed patterns of the eighth comparative example.

The speed patterns of the fourth example can be created by reversing the speed patterns of the second example illustrated in FIG. 8 vertically and shifting the speed patterns along a time axis for adjustment of the mold opening completion timing. The forward movement speed is converted as a backward movement speed. The speed patterns of the seventh comparative example can be created by similarly processing the speed patterns of the third comparative example illustrated in FIG. 8. Additionally, the speed patterns of the eighth comparative example can be created by similarly processing the speed patterns of the fourth comparative example illustrated in FIG. 8.

The control unit 90 gradually increases the deceleration, maintains the deceleration uniformly, then gradually reduces the deceleration, does not make the deceleration into zero, subsequently gradually increases the deceleration, and finally gradually reduces the acceleration, during the deceleration of reducing the backward movement speed from V2 to Zero according to the speed pattern illustrated by the solid line L34. Therefore, in the fourth example, at the time of the end of deceleration, a change in deceleration can be made gentler and vibration can be further reduced than that of the seventh comparative example or the eighth comparative example.

The control unit 90 may begin switching of the set speed before moving average processing from V1 (V1 < V2) to zero at a timing when the deceleration is made gradually small, during the deceleration of reducing the backward movement speed from V2 to zero according to the speed pattern illustrated by the solid line L34. In order to limit a change in deceleration at the time of the end of deceleration, the deceleration can be made gradually small, cannot be made into zero, and can be made gradually large.

The output unit 96 may display a setting screen to which a timing when vibration is reduced is input. The timing for the input includes the time of the start of acceleration of mold closing, the time of the end of acceleration of mold closing, the time of the start of deceleration of mold opening, the time of the end of deceleration of mold opening, or the like. Among such timings, one timing may be selected or a plurality of timings may be selected. The control unit 90 corrects a speed pattern of the cross-head 21 on the basis of the setting of the setting screen. In addition, the control unit 90 may manage positions or speeds that are not displayed on the setting screen 80 in order to correct the speed pattern as described above.

Additionally, the output unit 96 may display a setting screen to which the reduction level of vibration is input. Since a change in acceleration is limited in order to reduce vibration, a molding cycle becomes long. Since a plurality of the reduction levels of vibration are prepared, the molding cycle can be made to fall in an allowed time, and the reduction levels of vibration can be reduced as low as possible. The control unit 90 corrects the speed pattern of the cross-head 21 on the basis of the setting of the setting screen.

Although the embodiments of the injection molding machine have been described above in detail, the invention is not limited to the above specific embodiments, and various alterations and improvements can be made within the scope of the invention described in the claims.

Although the control unit 90 of the above embodiment is used for the vibration reduction of the mold opening/closing operation of the mold clamping unit 10, the control unit 90 may be used for the vibration reduction of the operation of the injection unit 40, the vibration reduction of the operation of a moving unit that brings or separate the injection unit 40 close to or from the mold unit 30, the vibration reduction of the operation of the ejector unit 50, or the like.

Although the above mold clamping unit 10 is of the horizontal type in which the mold opening/closing direction is the horizontal direction, the mold clamping unit 10 may be of a vertical type in which the mold opening/closing direction is an upward-downward direction. The vertical type mold clamping unit has a lower platen, an upper platen, the toggle support, the tie-bar, the toggle mechanism, the mold clamping motor, and the like. Any one of the lower platen and the upper platen is used as the stationary platen, and the remaining one is used for as movable platen. A lower mold is attached to the lower platen, and an upper mold is attached to the upper platen. The lower mold and the upper mold constitute the mold unit. The lower mold may be attached to the lower platen via a rotary table. The toggle support is disposed below the lower platen. The toggle mechanism is disposed between the toggle support and the lower platen. The tie-bar is made parallel to the vertical direction, passes through the lower platen, and couples the upper platen and the toggle support together.

Although the mold clamping unit 10 of the above embodiment has the mold clamping motor 25 that actuates the toggle mechanism 20 and the toggle mechanism 20, a linear motor may be used for the mold opening and closing, and an electromagnet may be used for the mold clamping. The electromagnetic type mold clamping unit has, for example, the stationary platen, the movable platen, a rear platen, the tie-bar, a suction plate, a rod, and the like. The rear platen is disposed a side (that is, behind the movable platen) opposite to the stationary platen with the movable platen as a reference. The tie-bar couples the stationary platen and the rear platen together in the mold opening/closing direction with a space therebetween. The suction plate is made movable forward and backward together with the movable platen behind the rear platen. The rod is inserted through a through-hole of the rear platen to couple the movable platen and the suction plate together. The electromagnet is formed in at least one of the rear platen and the suction plate, a suction force caused by the electromagnet acts between the rear platen and the suction plate, and a clamping force is generated.

### Brief Description of the Reference Symbols

- 10:: MOLD CLAMPING UNIT
- 12:: STATIONARY PLATEN
- 13:: MOVABLE PLATEN
- 15:: TOGGLE SUPPORT
- 16:: TIE-BAR
- 18:: CLAMPING FORCE DETECTOR
- 20:: TOGGLE MECHANISM
- 21:: CROSS-HEAD
- 25:: MOLD CLAMPING MOTOR
- 26:: MOTION CONVERSION MECHANISM
- 27:: TORQUE DETECTOR
- 30:: MOLD UNIT
- 40:: INJECTION UNIT
- 50:: EJECTOR UNIT
- 90:: CONTROL UNIT

## Claims

1. An injection molding machine comprising:
a movable part (21);
a drive part (25) that moves the movable part (21); and
a control unit (90) that is configured to control the drive part (25),
**characterized in that** the control unit (90) is configured
- to create, in a velocity versus time diagram, speed patterns in polygonal lines wherein inclinations prepared in advance are used when changing speed;
- to gradually reduce acceleration of the movable part (21), to then not make the acceleration into zero, and to subsequently gradually increase the acceleration, during the acceleration of increasing the speed of the movable part (21) in a predetermined direction.

2. The injection molding machine according to Claim 1,
wherein the control unit (90) is configured to gradually reduce the acceleration, to then not make the acceleration into zero, and to subsequently gradually increase the acceleration, in order to limit a change in the acceleration at the time of the end of acceleration, during the acceleration of increasing the speed of the movable part (21) in a predetermined direction.

3. The injection molding machine according to Claim 1 or 2,
wherein the control unit (90) is configured to gradually reduce the acceleration, to then not make the acceleration into zero, and to subsequently gradually increases the acceleration, in order to limit a change in the acceleration at the time of the start of acceleration, during the acceleration of increasing the speed of the movable part (21) in a predetermined direction.

4. The injection molding machine according to any one of Claims 1 to 3,
wherein the control unit (90) is configured to gradually reduce the deceleration of the movable part (21), to then not make the deceleration into zero, and to subsequently gradually increase the deceleration, during the deceleration of reducing the speed of the movable part (21) in a predetermined direction.

5. An injection molding machine comprising:
a movable part (21);
a drive part (25) that moves the movable part (21); and
a control unit (90) that is configured to control the drive part (25),
**characterized in that** the control unit (90) is configured
- to create, in a velocity versus time diagram, speed patterns in polygonal lines wherein inclinations prepared in advance are used when changing speed;
- to gradually reduce deceleration of the movable part (21), to then not make the deceleration into zero, and to subsequently gradually increase the deceleration, during the deceleration of reducing the speed of the movable part (21) in a predetermined direction.

6. The injection molding machine according to Claim 4 or 5,
wherein the control unit (90) is configured to gradually reduce the deceleration, to then not make the deceleration into zero, and to subsequently gradually increase the deceleration, in order to limit a change in the deceleration at the time of the start of deceleration, during the deceleration of reducing the speed of the movable part (21) in a predetermined direction.

7. The injection molding machine according to any one of Claims 4 to 6,
wherein the control unit (90) is configured to gradually reduce the deceleration, to then does not make the deceleration into zero, and to subsequently gradually increase the deceleration, in order to limit a change in the deceleration at the time of the end of deceleration, during the deceleration of reducing the speed of the movable part (21) in a predetermined direction.

8. The injection molding machine according to any one of Claims 1 to 7,
wherein the control unit (90) is configured to smoothen the speed patterns in polygonal lines through smoothing.

9. The injection molding machine according to any one of Claims 1 to 8,
wherein the drive part is a mold clamping motor (25), and
wherein the movable part is a cross-head (21) that is moved forward and backward by the mold clamping motor.

## Patentansprüche

1. Spritzgießmaschine, umfassend:
eine bewegliche Komponente (21);
eine Antriebskomponente (25), die die bewegliche Komponente (21) bewegt; und
eine Steuereinheit (90), die konfiguriert ist, die Antriebskomponente (25) zu steuern,
**dadurch gekennzeichnet, dass** die Steuereinheit (90) konfiguriert ist,
- in einem Geschwindigkeits-/Zeit-Diagramm Geschwindigkeitsmuster in polygonalen Linien zu erzeugen, wobei vorab vorbereitete Steigungen verwendet werden, wenn die Geschwindigkeit geändert wird;
- die Beschleunigung der beweglichen Komponente (21) allmählich zu verringern, so dass daraufhin die Beschleunigung nicht null wird, und anschließend die Beschleunigung während der Beschleunigung des Erhöhens der Geschwindigkeit der beweglichen Komponente (21) in einer vorgegebenen Richtung allmählich zu erhöhen.

2. Spritzgießmaschine nach Anspruch 1,
wobei die Steuereinheit (90) konfiguriert ist, die Beschleunigung allmählich zu verringern, so dass daraufhin die Beschleunigung nicht null wird, und anschließend die Beschleunigung während der Beschleunigung des Erhöhens der Geschwindigkeit der beweglichen Komponente (21) in einer vorgegebenen Richtung allmählich zu erhöhen, um eine Änderung der Beschleunigung zum Zeitpunkt des Endes der Beschleunigung zu begrenzen.

3. Spritzgießmaschine nach Anspruch 1 oder 2,
wobei die Steuereinheit (90) konfiguriert ist, die Beschleunigung allmählich zu verringern, so dass daraufhin die Beschleunigung nicht null wird, und anschließend die Beschleunigung während der Beschleunigung des Erhöhens der Geschwindigkeit der beweglichen Komponente (21) in einer vorgegebenen Richtung allmählich zu erhöhen, um eine Änderung der Beschleunigung zum Zeitpunkt des Beginns der Beschleunigung zu begrenzen.

4. Spritzgießmaschine nach einem der Ansprüche 1 bis 3,
wobei die Steuereinheit (90) konfiguriert ist, die Verzögerung der beweglichen Komponente (21) allmählich zu verringern, so dass daraufhin die Verzögerung nicht null wird, und anschließend die Verzögerung während der Verzögerung des Verringerns der Geschwindigkeit der beweglichen Komponente (21) in einer vorgegebenen Richtung allmählich zu erhöhen.

5. Spritzgießmaschine, umfassend:
eine bewegliche Komponente (21);
eine Antriebskomponente (25), die die bewegliche Komponente (21) bewegt; und
eine Steuereinheit (90), die konfiguriert ist, die Antriebskomponente (25) zu steuern,
**dadurch gekennzeichnet, dass** die Steuereinheit (90) konfiguriert ist,
- in einem Geschwindigkeits-/Zeit-Diagramm Geschwindigkeitsmuster in polygonalen Linien zu erzeugen, wobei vorab vorbereitete Steigungen verwendet werden, wenn die Geschwindigkeit geändert wird;
- die Verzögerung der beweglichen Komponente (21) allmählich zu verringern, so dass daraufhin die Verzögerung nicht null wird, und anschließend die Verzögerung während der Verzögerung des Verringerns der Geschwindigkeit der beweglichen Komponente (21) in einer vorgegebenen Richtung allmählich zu erhöhen.

6. Spritzgießmaschine nach Anspruch 4 oder 5,
wobei die Steuereinheit (90) konfiguriert ist, die Verzögerung allmählich zu verringern, so dass daraufhin die Verzögerung nicht null wird, und anschließend die Verzögerung während der Verzögerung des Verringerns der Geschwindigkeit der beweglichen Komponente (21) in einer vorgegebenen Richtung allmählich zu erhöhen, um eine Änderung der Verzögerung zum Zeitpunkt des Beginns der Verzögerung zu begrenzen.

7. Spritzgießmaschine nach einem der Ansprüche 4 bis 6,
wobei die Steuereinheit (90) konfiguriert ist, die Verzögerung allmählich zu verringern, so dass daraufhin die Verzögerung nicht null wird, und anschließend die Verzögerung während der Verzögerung des Verringerns der Geschwindigkeit der beweglichen Komponente (21) in einer vorgegebenen Richtung allmählich zu erhöhen, um eine Änderung der Verzögerung zum Zeitpunkt des Endes der Verzögerung zu begrenzen.

8. Spritzgießmaschine nach einem der Ansprüche 1 bis 7,
wobei die Steuereinheit (90) konfiguriert ist, die Geschwindigkeitsmuster in polygonalen Linien durch Glätten zu glätten.

9. Spritzgießmaschine nach einem der Ansprüche 1 bis 8,
wobei die Antriebskomponente eine Formschließmotor (25) ist, und
wobei die bewegliche Komponente (21) ein Querhaupt (21) ist, das durch den Formschließmotor vorwärts und rückwärts bewegt wird.

## Revendications

1. Une machine de moulage par injection comprenant :
une partie mobile (21) ;
une partie d'entraînement (25) qui déplace la partie mobile (21) ; et
une unité de commande (90) qui est configurée pour contrôler la partie d'entraînement (25),
**caractérisée en ce que** l'unité de commande (90) est configurée
- pour créer, sur un diagramme de vitesse par rapport à la durée, des modèles de vitesse sous forme de lignes polygonales, des inclinaisons préparées à l'avance étant utilisées en cas de changement de vitesse ;
- pour réduire progressivement l'accélération de la partie mobile (21), afin que l'accélération ne soit pas nulle, et pour augmenter ensuite progressivement l'accélération, pendant l'accélération en augmentant la vitesse de la partie mobile (21) dans une direction prédéterminée.

2. La machine de moulage par injection selon la revendication 1,
dans laquelle l'unité de commande (90) est configurée pour réduire progressivement l'accélération, afin que l'accélération ne soit pas nulle, puis pour augmenter progressivement l'accélération, afin de limiter un changement d'accélération au moment de la fin de l'accélération, pendant l'accélération en augmentant la vitesse de la partie mobile (21) dans une direction prédéterminée.

3. La machine de moulage par injection selon la revendication 1 ou 2,
dans laquelle l'unité de commande (90) est configurée pour réduire progressivement l'accélération, afin que l'accélération ne soit pas nulle, puis pour augmenter progressivement l'accélération, afin de limiter un changement d'accélération au moment du début de l'accélération, pendant l'accélération en augmentant la vitesse de la partie mobile (21) dans une direction prédéterminée.

4. La machine de moulage par injection selon l'une quelconque des revendications 1 à 3,
dans laquelle l'unité de commande (90) est configurée pour réduire progressivement la décélération de la partie mobile (21) afin que la décélération ne soit pas nulle, augmenter ensuite progressivement la décélération, pendant la décélération en réduisant la vitesse de la partie mobile (21) dans une direction prédéterminée.

5. La machine de moulage par injection comprenant :
une partie mobile (21) ;
une partie d'entraînement (25) qui déplace la partie mobile (21) ; et
une unité de commande (90) qui est configurée pour contrôler la partie d'entraînement (25),
**caractérisée en ce que** l'unité de commande (90) est configurée
- pour créer, sur un diagramme de vitesse par rapport à la durée, des modèles de vitesse sous forme de lignes polygonales, des inclinaisons préparées à l'avance étant utilisées en cas de changement de vitesse ;
- pour réduire progressivement la décélération de la partie mobile (21), afin que la décélération ne soit pas nulle, et pour augmenter ensuite progressivement la décélération, pendant la décélération en réduisant la vitesse de la partie mobile (21) dans une direction prédéterminée.

6. La machine de moulage par injection selon la revendication 4 ou 5,
dans laquelle l'unité de commande (90) est configurée pour réduire progressivement la décélération, afin que la décélération ne soit pas nulle, puis pour augmenter progressivement la décélération, afin de limiter un changement de décélération au moment de la fin de la décélération, pendant la décélération en réduisant la vitesse de la partie mobile (21) dans une direction prédéterminée.

7. La machine de moulage par injection selon l'une quelconque des revendications 4 à 6,
dans laquelle l'unité de commande (90) est configurée pour réduire progressivement la décélération, afin que la décélération ne soit pas nulle, puis pour augmenter progressivement la décélération, afin de limiter un changement de décélération au moment de la fin de la décélération, pendant la décélération en réduisant la vitesse de la partie mobile (21) dans une direction prédéterminée.

8. La machine de moulage par injection selon l'une quelconque des revendications 1 à 7,
dans laquelle l'unité de commande (90) est configurée pour lisser les modèles de vitesse sous forme de lignes polygonales par lissage.

9. La machine de moulage par injection selon l'une quelconque des revendications 1 à 8,
dans laquelle la partie d'entraînement est un moteur de serrage de moule (25), et
dans laquelle la partie mobile est une traverse (21) qui est déplacée vers l'avant et vers l'arrière par le moteur de serrage de moule.
